# EUROPÄISCHE PATENTSCHRIFT

(11) **EP 3 919 034 B1**
(45) Veröffentlichungstag und Bekanntmachung des Hinweises auf die Patenterteilung: **10.07.2024**
(21) Anmeldenummer: 21175130.0
(22) Anmeldetag: 20.05.2021
(51) Int. Cl.: A61G 1/013, A61G 12/00, B64D 11/00

(54) **MOBILE VORRICHTUNG MIT INTEGRIERTER TRAGEVORRICHTUNG FÜR PATIENTEN**
MOBILE DEVICE WITH INTEGRATED PATIENT SUPPORT
DISPOSITIF MOBILE POURVU DE DISPOSITIF DE SUPPORT INTÉGRÉ POUR LES PATIENTS

(30) Priorität: 05.06.2020 DE 102020114943
(43) Veröffentlichungstag der Anmeldung: 08.12.2021
(73) Patentinhaber: Airbus Operations GmbH, 21129 Hamburg (DE)
(72) Erfinder: MUIN, Andrew, 21129 Hamburg (DE); SEGELHORST, Hendrik, 21129 Hamburg (DE)
(74) Vertreter: LKGLOBAL Lorenz & Kopf Patentanwalt Attorney at Law PartG mbB

(56) Entgegenhaltungen:
- CN-A- 110 882 120
- CN-Y- 2 254 677
- DE-A1- 19 650 584
- DE-C1- 4 112 270
- US-B1- 6 273 366

## Beschreibung

### TECHNISCHES GEBIET

Die Erfindung betrifft eine mobile Vorrichtung mit integrierter Tragevorrichtung für Patienten. Ferner betrifft die Erfindung ein System zum Transport liegender Patienten in einem Verkehrsmittel.

### HINTERGRUND DER ERFINDUNG

Für den Transport von Patienten in einem Verkehrsmittel, beispielsweise einem Verkehrsflugzeug, werden üblicherweise Tragen eingesetzt, die in dem Verkehrsmittel auf einer Reihe von Passagiersitzen angeordnet werden, die dann für die normale Beförderung von Passagieren blockiert sind. Patienten werden für den Transport oft von außerhalb auf einer Trage in das Verkehrsmittel getragen und die Trage wird für die Reise befestigt. Aufgrund der Größe einer solchen Trage werden üblicherweise keine Tragen an Bord des Verkehrsmittels mitgeführt, sodass während der Reise erkrankte Personen nicht unmittelbar auf eine Trage gelegt werden können.

EP 2 817 221 A1 offenbart eine Toilettenanordnung für eine Kabine eines Verkehrsflugzeugs, die ein Gehäuse aufweist, das in einem Bereich eine verschwenkbare Klappe ("stretcher flap") aufweist, die das Manövrieren einer Trage innerhalb der Kabine insbesondere direkt vor einem Türbereich erleichtert.

CN 110 882 120 A offenbart einen multifunktionalen Trolley mit einem darauf angeordneten, klappbaren Tisch, der aus zwei separaten Teilen besteht, welche an einer Oberseite des Trolleys auf Gleitschienen angeordnet sind und jeweils einen ersten und einen zweiten Körper aufweisen, die klappbar miteinander verbunden sind.

DE 41 12 270 C1 offenbart eine Krankentragenlagerungsbühne zum lösbaren Einbau in Fahrzeugen, mit zwei längsverlaufenden Schienen und diese miteinander verbindenden Traversen und Querverbindungen sowie mit Gelenken, sodass zueinander klappbare Gestellrahmen gebildet sind.

DE 196 50 584 A1 zeigt eine Vorrichtung zum Transport und zur Überwachung und/oder Behandlung von Patienten, mit einer mit Handgriffen versehenen Trage, die auf ein fahrbares Gestell aufsetzbar ist.

CN 2 254 677 Y offenbart einen Erste-Hilfe-Schrank für eine Baustelle mit unterseitig angeordneten Rädern sowie einer darin angeordneten Trage.

US 6 273 366 B1 offenbart eine Patiententransportvorrichtung mit einer Patiententrage, die an unterschiedlichen Stellen innerhalb einer Passagierkabine positionierbar ist, um abhängig von Flugphasen unterschiedliche Bereiche zu nutzen bzw. freizuhalten.

### ZUSAMMENFASSUNG DER ERFINDUNG

Es ist eine Aufgabe der Erfindung, eine Vorrichtung vorzuschlagen, mit der eine bedarfsweise Unterbringung von Patienten auf einer Trage während der Reise in einem Verkehrsmittel ermöglicht wird, wobei ein geringster möglicher Bauraum innerhalb der Kabine blockiert werden sollte.

Die Aufgabe wird gelöst durch eine mobile Vorrichtung mit den Merkmalen des unabhängigen Anspruchs 1. Vorteilhafte Ausführungsformen und Weiterbildungen sind den Unteransprüchen und der nachfolgenden Beschreibung entnehmbar.

Es wird eine mobile Vorrichtung mit integrierter Tragevorrichtung für Patienten vorgeschlagen, aufweisend eine Basis mit drehbar gelagerten Rädern auf einer Unterseite zum Bewegen der Basis auf einem Boden, ein auf einer Oberseite der Basis befestigtes Gestell, das mindestens einseitig offen ist, und eine Tragevorrichtung mit schwenkbar zueinander gelagerten Segmenten, wobei die Segmente dazu ausgebildet sind, die Tragevorrichtung in eine erste Form zu falten, in der alle Segmente in einer Ebene aneinander anschließen, und in eine zweite Form zu falten, in der die Tragevorrichtung kompaktiert ist, wobei die Tragevorrichtung und das Gestell komplementär zueinander ausgebildet sind, sodass die Tragevorrichtung in der zweiten Form weitgehend vollständig in das Gestell einbringbar ist, wobei die Breite der Tragevorrichtung, die einer kurzen Seite der Tragevorrichtung entspricht, mit der Höhe des Gestells korreliert, und wobei die Segmente derart gestaltet sind, dass sie bei Platzierung hochkant in dem Gestell einen Teil der äußeren Oberfläche des Gestells ausbilden.

Die erfindungsgemäße Vorrichtung erlaubt einen bedarfsweisen Transport von Patienten in einem Verkehrsmittel, indem eine kompakte, mobile Einheit bereitgestellt ist, welche eine kompaktierte Tragevorrichtung beherbergt. Hierzu ist vorgesehen, dass die mobile Vorrichtung an einer Unterseite ihrer Basis Räder aufweist, mit der die Vorrichtung auf dem Boden bewegbar ist. Hierdurch wird einem Benutzer erlaubt, die mobile Vorrichtung an einem hierfür geeigneten Ort innerhalb einer Passagierkabine des betreffenden Verkehrsmittels unterzubringen und lediglich bedarfsweise zu einer erkrankten Person zu führen. Die Ausführung der Tragevorrichtung mit mehreren, schwenkbar zueinander angeordneten Segmenten erlaubt, eine großformatige Trage durch Zusammenklappen der einzelnen Segmente zu kompaktieren. Die Segmente bestehen bevorzugt aus einem starren, plattenförmigen Material. Die Segmente können an ihren zu den jeweils anderen Segmenten weisenden Begrenzungskanten jeweils eine Scharniervorrichtung aufweisen, die mit einer Scharniervorrichtung des anschließenden Segments zu einem Scharnier verbunden wird. Die Scharniere könnten derart ausgebildet sein, dass sie sich lediglich in einem Bereich von 0-180° verschwenken lassen und bei 180° eine starre Begrenzung des Schwenkwinkels erzwingen. Es könnte damit beispielsweise ausreichen, die Segmente auseinander zu klappen, sodass sie in ihrer aufeinanderfolgenden Reihenfolge eine ebene Fläche ausbilden. Durch die Begrenzung der Schwenkwinkel bleibt diese ebene Form auch unter Last bestehen. Allerdings sind auch Mechanismen denkbar, die beispielsweise Verriegelungselemente umfassen, die beim Auseinanderfalten der Segmente ineinander einrasten und zum Kompaktieren der Trage manuell wieder gelöst werden müssen.

Das Gestell der Vorrichtung ist dazu vorgesehen, eine äußere Form der Vorrichtung vorzugeben und eine ortsfeste Halterung der Tragevorrichtung an der Basis zu ermöglichen. Das Gestell erlaubt, einen Aufnahmeraum innerhalb der Kabine auf eine geringstmögliche Größe für den vorgesehenen Zweck zu beschränken. Die Tragevorrichtung ist indes mit der Gestaltung der klappbaren Segmente auf den durch das Gestell vorgegebenen Bauraum angepasst. Die Segmente sind derart auszugestalten, dass die Breite der Tragevorrichtung, die einer kurzen Seite der Tragevorrichtung entspricht, mit der Höhe des Gestells korreliert. Die zusammengefalteten Segmente werden folglich hochkant in das Gestell eingebracht. Die gesamte Fläche der Transportvorrichtung wird durch das Zusammenfalten der Segmente reduziert, sodass sich die Segmente in einer Tiefen- und Breitenerstreckung des Gestells einbringen lassen.

Das Gestell könnte unterschiedliche Elemente aufweisen, die die äußere Form des Gestells definieren. Das Gestell könnte einen Rahmen mit mehreren Stäben aufweisen, die beispielsweise einen im Wesentlichen quaderförmigen Raum definieren. Es sind alternativ oder zusätzlich dazu auch einzelne Wandungen vorstellbar, die zumindest einen Teil der Form definieren.

Die Segmente sind derart zu gestalten, dass sie bei Platzierung in dem Gestell einen Teil der äußeren Oberfläche des Gestells ausbilden, sodass die mobile Vorrichtung bei darin befindlicher Transportvorrichtung eine rundum geschlossene Einheit ausbildet. Damit lässt sie sich gut in einen Aufnahmeraum einschieben, ist vor Verschmutzungen geschützt und weist zudem ein vergleichsweise geringes Gewicht auf.

Zum Bewegen der Vorrichtung ist sinnvoll, zumindest einen Handgriff an dem Gestell anzuordnen. Weiterhin könnte sinnvoll sein, zumindest eines der Räder bedarfsweise blockieren zu können, um ein unbeabsichtigtes Bewegen der Vorrichtung innerhalb des Verkehrsmittels zu unterbinden. Statt eines Handgriffs könnte jedoch auch eine Steuereinheit vorgesehen sein, die eine Antriebsvorrichtung ansteuert.

In einer vorteilhaften Ausführungsform könnte das Gestell zwei Wandungen aufweisen, die von der Basis abstehen und einen Zwischenraum definieren, in den die Tragevorrichtung in der zweiten Form einschiebbar ist. Die zwei Wandungen müssen sich nicht zwangsläufig über die gesamte Breite und/oder über die gesamte Tiefe des Gestells erstrecken. Vielmehr können sie lediglich einen Teil einer Seiten- oder Stirnfläche überdecken und die Tragevorrichtung in der ersten Form aufnehmen. Eine Wandung könnte dabei ein flächiges Element sein, das zumindest eine weitgehend oder überwiegend geschlossene Oberfläche aufweist. Je nach vorgesehenem Einsatzort der mobilen Vorrichtung könnte sich eine Wandung aus einem Leichtbaumaterial, beispielsweise einem Honeycomb-Material anbieten.

In einer vorteilhaften Ausführungsform weist die Tragevorrichtung mindestens ein erstes und mindestens zwei zweite Segmente auf, die abwechselnd aufeinander folgen, wobei das zweite Segment eine größere Fläche aufweist als das erste Segment. Die zweiten Segmente könnten derart dimensioniert sein, dass sie sich entlang einer Tiefenerstreckung des Gestells einbringen lassen, während die ersten Segmente für eine Breitenerstreckung vorgesehen sind. Dabei ist vorgesehen, dass die Tiefe des Gestells deutlich die Breite übersteigt.

Es ist vorteilhaft, wenn die Fläche des zweiten Segments mindestens doppelt so groß ist wie die Fläche des ersten Segments. Die Tragevorrichtung könnte dann so ausgestaltet sein, dass die zweiten Segmente in der Tiefenrichtung des Gestells hin und her verlaufen und die ersten Segmente den Raum in Breitenrichtung des Gestells überspannen. Die zweiten Segmente könnten bündig aufeinander gelegt werden, wobei die ersten Segmente dann zwischen stirnseitigen Kanten der zweiten Segmente verlaufen. Alternativ dazu könnte die Tragevorrichtung auch so gefaltet werden, dass in einem zusammengefalteten Zustand ein Hohlraum zwischen den Segmenten gebildet ist und mitunter die Tragevorrichtung selbst die Wandung des Gestells ausbildet.

In einer vorteilhaften Ausführungsform besitzt das Gestell ein von der Basis beabstandetes Deckelelement, wobei die Tragevorrichtung zwischen das Deckelelement und die Basis einbringbar ist. Das Deckelelement schließt das Gestell nach oben hin ab und kann dem Gestell eine zusätzliche Steifigkeit verleihen. Es ist dann auch denkbar, auf die erfindungsgemäße Vorrichtung andere Gegenstände zu stellen, ohne die Entnahme der Tragevorrichtung zu behindern. Zudem könnte das Deckelelement dazu ausgebildet sein, Handgriffe und ähnliches aufzunehmen, sodass die Vorrichtung leichter handhabbar ist.

Es ist besonders vorteilhaft, wenn das Deckelelement eine Vertiefung zur Aufnahme eines Notfallkoffers aufweist. Der Notfallkoffer könnte verschiedene medizinische Utensilien beherbergen, beispielsweise Materialien und Medikamente zur Erstversorgung eines Patienten. Der Notfallkoffer ist bei der Anordnung im Deckelelement unabhängig von der momentanen Form der Tragevorrichtung leicht erreichbar. Durch eine auffällige Farbgebung fällt er optisch zudem stark auf, sodass ein Benutzer der erfindungsgemäßen Vorrichtung unmittelbar auf den Notfallkoffer hingewiesen wird.

Bei einer weiteren vorteilhaften Ausführungsform könnte mindestens eines der Räder mit einer Antriebsvorrichtung gekoppelt sein. Die Antriebsvorrichtung könnte mit einer Steuereinheit gekoppelt sein, die sich an dem Gestell und beispielsweise in dem vorangehend genannten Deckelelement befindet. Durch die Antriebsvorrichtung können auch schwerere Vorrichtungen leicht durch das Verkehrsmittel bewegt werden. Es ist vorstellbar, die Basis selbstfahrend auszugestalten.

Es ist zudem vorteilhaft, wenn äußerste Segmente der Tragevorrichtung jeweils einen Handgriff aufweisen. Der Handgriff könnte in einem besonders einfachen Fall lediglich als eine Ausnehmung realisiert sein. Die Tragevorrichtung ist dann sehr leicht zu handhaben und der Patient kann von zwei Personen aus dem Transportmittel getragen werden. An dieser Stelle sei darauf hingewiesen, dass die Tragevorrichtung so ausgestaltet sein sollte, dass sie auf gängige Transportgestelle gesetzt werden kann, die beispielsweise außerhalb des Fahrzeugs bereitstellbar sind.

Die Tragevorrichtung könnte auf einer Seite eine Vakuummatratze aufweisen. Die Vakuummatratze könnte mit Partikeln und Luft gefüllt sein, wobei durch Absaugen der Luft die Partikel durch eine auf die Partikel drückende Außenhaut der Matratze fixiert werden. Dadurch können Patienten in einer vorgegebenen Haltung bzw. Lage transportiert werden, die für den betreffenden Passagier manuell durch Ausrichten des Körpers auf der Matratze eingenommen und durch Absaugen der Luft fixiert wird.

Es ist dann bevorzugt, die Vakuummatratze in der zweiten Form innenliegend anzuordnen. Dies bietet sich an, da die Vakuummatratze dadurch in der zweiten Form gekapselt wird. Besonders bevorzugt sind die Segmente so ausgebildet, dass sie in der zweiten Form einen Hohlraum einschließen, wobei sich die Vakuummatratze in den Hohlraum erstreckt.

Besonders bevorzugt weist die Vorrichtung mit in dem Gestell eingebrachter Tragevorrichtung äußere Abmessungen auf, die höchstens denen eines Full-Size-Kabinentrolleys für Flugzeugkabinen entsprechen. Damit kann die erfindungsgemäße Vorrichtung einfach in einen Trolley-Stellplatz in einer Kabine eines Verkehrsflugzeugs eingestellt werden. Derartige Trolley-Stellplätze sind üblicherweise als Stauraum für Verpflegungstrolleys in Bordküchen vorgesehen.

Die Erfindung betrifft ferner ein System zum Transport liegender Patienten in einem Verkehrsmittel, aufweisend mindestens eine vorangehend erläuterte Vorrichtung.

Bevorzugt weist das System ferner eine Aufnahmevorrichtung zur Aufnahme der Transportvorrichtung in der ersten Form auf, wobei die Aufnahmevorrichtung eine klappbare Auflagefläche und eine faltbare Haube aufweist, die dazu ausgebildet ist, die Tragevorrichtung vollständig zu überdecken. Die Aufnahmevorrichtung könnte innerhalb einer Kabine montiert werden und bedarfsweise die Tragevorrichtung in der ersten Form aufnehmen, in der ein Patient auf ihr liegt. Die klappbare Auflagefläche könnte in dem Bedarfsfall von einer Verstauposition in eine Gebrauchsposition geschwenkt werden, um die Tragevorrichtung aufzunehmen. Durch die faltbare Haube kann die Person vollständig abgedeckt werden, um ihr eine Privatsphäre und Diskretion zu ermöglichen.

In einer weiter vorteilhaften Ausführungsform des System weist die Auflagefläche zwei schwenkbar zueinander angeordnete Klappen auf, welche bündig aufeinander klappbar und um 180° auseinanderklappbar sind, und wobei die Haube mit beiden Klappen gekoppelt ist, sodass sie beim Auseinanderklappen wie eine Ziehharmonika auseinandergefaltet wird und beim Aufeinanderklappen zusammengefaltet wird. Die Kombination aus den beiden Klappen und der faltbaren Haube ist folglich ähnlich wie ein faltbarer Papierlampion realisiert. Liegen die beiden Klappen aufeinander, kann sich die Auflagefläche in einer Wandung im Innern der Kabine befinden. Durch Aufschwenken der beiden Klappen in eine Stellung, in der beide Klappen einen Winkel von 180° zueinander einschließen, kann folglich die Haube geöffnet werden und die Auflagefläche vollständig umgeben. Es ist bevorzugt, die Haube zumindest an einer Seite öffnen zu können, um die Tragevorrichtung einschieben zu können. Schließlich könnte die Aufnahmevorrichtung in eine Tür oder eine Wandung eines Monuments in einer Kabine eines Fahrzeugs integrierbar sein. Das Monument könnte beispielsweise eine Bordtoilette beherbergen. Damit ist bevorzugt ein Teil eines Innenraums einer Bordtoilette nutzbar, um die Trageeinrichtung mit einem Patienten aufzunehmen.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
Fig. 1 bis 3 zeigen eine mobile Vorrichtung mit integrierter Tragevorrichtung in unterschiedlichen Zuständen.
Fig. 4 zeigt eine kompaktierte Tragevorrichtung in einer Draufsicht.
Fig. 5 zeigt eine auseinandergefaltete Tragevorrichtung.
Fig. 6 zeigt einen die Vorrichtung bewegenden Benutzer.
Fig, 7 zeigt die von zwei Benutzern getragene Tragevorrichtung mit darauf befindlichem Patienten.
Fig. 8 zeigt die Tragevorrichtung auf einem Tragegestell.
Fig. 9 bis 11 zeigen ein System zum Transport liegender Patienten mit einer in einem Kabinenmonument integrierten Aufnahmevorrichtung.
Fig. 12 zeigt ein Flugzeug.

### DETAILLIERTE DARSTELLUNG EXEMPLARISCHER

### AUSFÜHRUNGSFORMEN

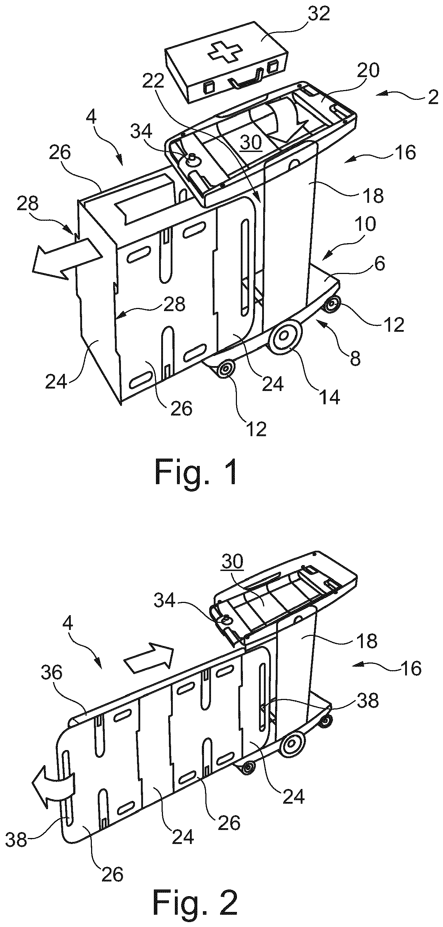

Fig. 1 zeigt eine mobile Vorrichtung 2 mit integrierter Tragevorrichtung 4 für Patienten. Die Vorrichtung 2 weist eine Basis 6 auf, die eine Unterseite 8 und eine Oberseite 10 besitzt. An der Unterseite 8 sind mehrere Räder 12 und 14 angeordnet. Beispielhaft sind mittig angeordnete Räder 14 mit einer hier nicht näher dargestellten elektrischen Antriebsvorrichtung gekoppelt und werden damit angetrieben. Die Basis 6 lässt sich folglich mithilfe eines elektrischen Antriebs verfahren. Dies ist allerdings lediglich eine mögliche Variante, ein Ausführung der Vorrichtung 2 zum manuellen Bewegen wäre ebenso denkbar.

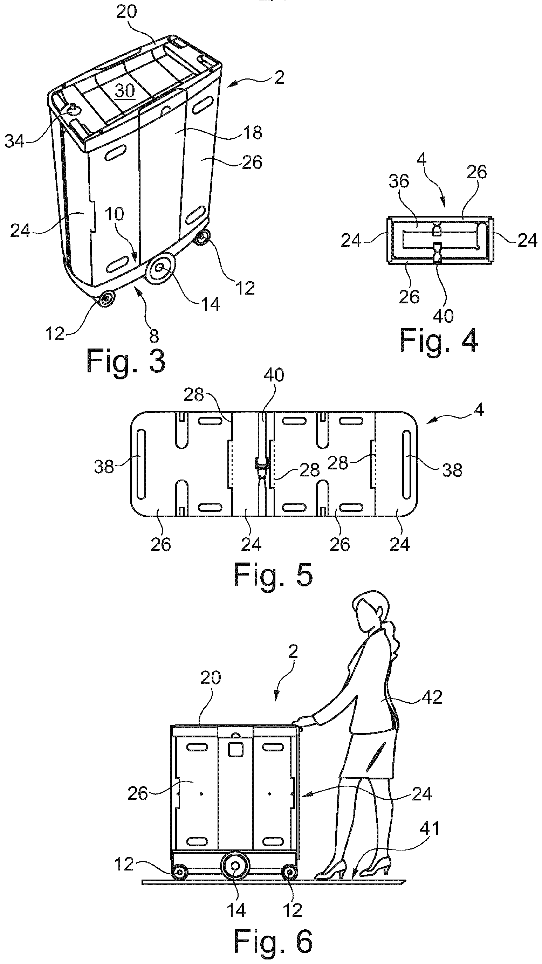

An der Oberseite 10 ist ein Gestell 16 befestigt, welches hier 2 einander gegenüberliegende Wandungen 18 sowie ein Deckelelement 20 aufweist. Zwischen den Wandungen 18 und dem Deckelelement 20 ist ein Zwischenraum 22 definiert, in den die Tragevorrichtung 4 einbringbar ist. Diese weist zwei erste Segmente 24 und zwei zweite Segmente 26 auf, welche über Scharniere 28 schwenkbar miteinander verbunden sind. Dadurch kann die Tragevorrichtung 4 in eine erste Form (siehe beispielsweise Fig. 2 und 5) und in eine zweite Form, die in Fig. 1 und in Fig. 4 ersichtlich ist, gebracht werden.

In der zweiten Form sind die Segmente 24 und 26 so zueinander verschwenkt, dass die Tragevorrichtung 4 kompaktiert ist und dadurch in den Zwischenraum 22 einbringbar ist. Das in der Zeichnungsebene links dargestellte erste Segment 24 könnte hierfür etwa eine Breite aufweisen, die einer Breite des Zwischenraums 22 entspricht. Die Breite des in der Zeichnungsebene rechts dargestellten zweiten Segments 26 entspricht im Wesentlichen der Tiefe des Zwischenraums 22. Hierbei sei angemerkt, dass die in der Fig. 1 ersichtliche kürzere Dimension auf der Oberseite 10 der Basis 6 als die Breite bezeichnet wird und die längere Dimension als die Tiefe.

Durch das Herausziehen der Tragevorrichtung 4 aus dem Zwischenraum 22 in Pfeilrichtung kann diese dem Gestell 16 entnommen und durch Ausklappen aller Segmente 24 und 26 in eine durchgehend flache Form zum Tragen eines Patienten eingesetzt werden.

An dem Deckelelement 20 ist auf einer von der Basis 6 abgewandten Seite eine Vertiefung 30 angeordnet, die dazu ausgebildet ist, einen Notfallkoffer 32 aufzunehmen. Stirnseitig an dem Deckelelement 20 ist ferner eine Steuereinheit 34 angeordnet, die beispielhaft als eine Art Joystick ausgebildet ist, mit der die Antriebsvorrichtung der Räder 14 steuerbar ist. Ein Benutzer kann die Vorrichtung folglich durch Betätigen der Steuereinheit 34 bewegen.

Fig. 2 zeigt die Tragevorrichtung 4 in der ersten Form. Hier sind alle Segmente 24 und 26 parallel zueinander und in einer gemeinsamen Ebene angeordnet, sodass eine durchgehende Tragefläche ausgebildet ist. Den Fig. 1 und 2 ist entnehmbar, dass sich an der Tragevorrichtung 4 zudem eine Vakuummatratze 36 befindet, die mit Luft und Partikeln gefüllt sein kann, um eine formbare Unterlage für einen Patienten auszubilden. Ist die Unterlage bei aufliegendem Patienten entsprechend zurecht geformt, beispielsweise um eine bestimmte Lage des Patienten zu erreichen, können durch Absaugen der in der Vakuummatratze 36 befindlichen Luft die eingenommenen Positionen der Partikel fixiert werden. Dies ist besonders vorteilhaft, um Patienten eine gleichbleibende Lagerung zu ermöglichen.

Der Fig. 3 ist entnehmbar, dass die Segmente 24 und 26 teilweise äußere Oberflächen der Vorrichtung 2 bereitstellen können. Hier ist die Tragevorrichtung 4 vollständig in den Zwischenraum 22 eingeschoben, sodass die Vorrichtung eine allseits geschlossene Form aufweist, die ungefähr der eines Kabinentrolleys entspricht. Es ist besonders sinnvoll, die Vorrichtung 2 derart zu dimensionieren, dass sie an Stellplätzen gelagert werden kann, die üblicherweise für Kabinentrolleys vorgesehen sind. Beispielsweise kann die Vorrichtung 2 dieselben Abmessungen aufweisen, wie ein Fullsize-Trolley.

Fig. 4 zeigt die Tragevorrichtung 4 in der zweiten Form. Die Segmente 24 und 26 sind derart zueinander geklappt, dass die Vakuummatratze 36 an der Innenseite des resultierenden Pakets positioniert ist und vollständig durch die Segmente 24 und 26 geschützt ist. Diese bilden überdies die Form eines Quaders aus.

Fig. 5 zeigt die Tragevorrichtung 4 in der ersten Form, bei der alle Segmente 24 und 26 parallel zueinander verlaufen und eine Tragefläche ausbilden. Die Tragevorrichtung 4 kann durch Handgriffe 38 gehandhabt werden, um den Patienten zu tragen. Zum Fixieren des Patienten ist ein Gurt 40 vorgesehen.

Fig. 6 zeigt die erfindungsgemäße Vorrichtung 2 auf einem Fußboden 41 einer Kabine eines Transportmittels. Ein Benutzer 42 kann die Vorrichtung 2 zu dem gewünschten Ort bewegen und anschließend die Tragevorrichtung 4 ausklappen.

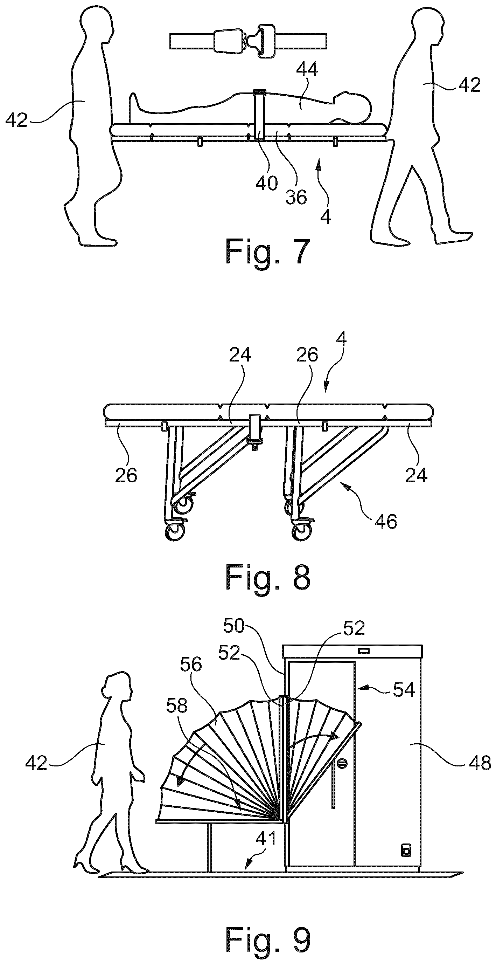

In Fig. 7 ist ein Patient 44 auf der Tragevorrichtung 4 auf der Vakuummatratze 36 gelagert und wird von zwei Benutzern 42 mittels der Handgriffe 38 getragen.

Fig. 8 illustriert schematisch, dass die Tragevorrichtung 4 so angepasst sein kann, dass sie auf einem üblichen Transportgestell 46 positionierbar ist. Ist die Tragevorrichtung 4 in einem Flugzeug oder einem anderen Verkehrsmittel eingesetzt, kann ein solches Transportgestell 46 direkt außerhalb des Verkehrsmittels positioniert sein, um anschließend die Tragevorrichtung 4 aufzunehmen.

Ein weiterer Aspekt der Erfindung wird in Fig. 9 dargestellt. Hier ist ein Kabinenmonument 48 in Form einer Bordtoilette gezeigt. Eine Monumentenwandung 50 weist beispielhaft zwei Klappen 52 einer Aufnahmevorrichtung 54 auf, die zwischen einer geschlossenen Position, in der beide Klappen 52 aufeinanderliegen, zu einer geöffneten Position verschwenkt werden, in der die beiden Klappen 52 einen Winkel von 180° zueinander einschließen. Sind die beiden Klappen 52 aufgeschwenkt, bilden sie eine Auflagefläche 58, auf die die Tragevorrichtung 4 gelegt werden kann. Eine Haube 56 kann ähnlich wie ein Papierlampion an den beiden Klappen 52 befestigt sein und wird durch Auseinanderklappen mit oder nach beiden Klappen 52 folglich über die resultierende Auflagefläche 58 gespannt.

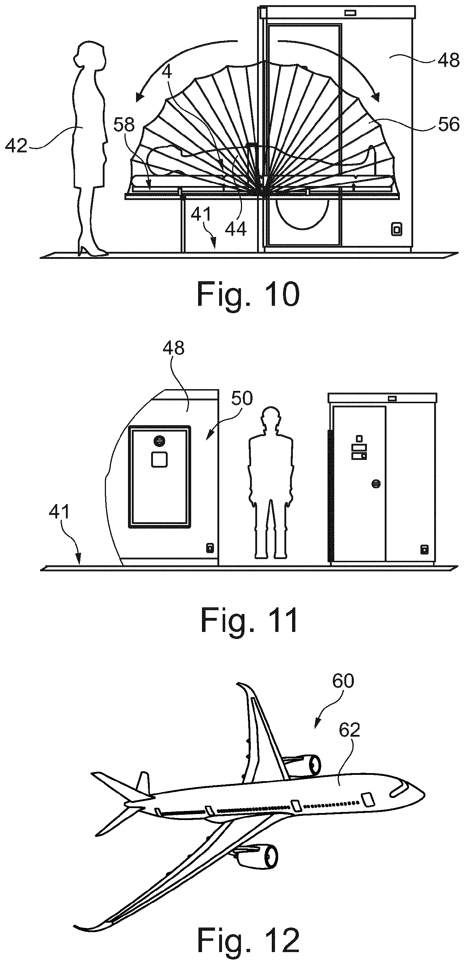

In Fig. 10 wird die Tragevorrichtung 4 mit einem darauf befindlichen Patienten 44 auf der Auflagefläche 58 mit geschlossener Haube 56 gezeigt.

Wie in Figur 11 ersichtlich, kann die Wandung 50 ohne weiteres in ein beliebiges Monument 50 integriert werden. Im geschlossenen Zustand mit bündig aufeinander liegenden Klappen 52 weist die Wandung 50 die Abmessungen einer herkömmlichen Wandung auf.

Fig. 12 zeigt schließlich ein Flugzeug 60, das eine Kabine 62 besitzt, in der mindestens eine Aufnahmevorrichtung 54 und/oder mindestens eine Vorrichtung 2 gemäß der vorhergehenden Beschreibung angeordnet ist.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: mobile Vorrichtung
- 4: Tragevorrichtung
- 6: Basis
- 8: Unterseite
- 10: Oberseite
- 12: Rad
- 14: Rad (angetrieben)
- 16: Gestell
- 18: Wandung
- 20: Deckelelement
- 22: Zwischenraum
- 24: erstes Segment
- 26: zweites Segment
- 28: Scharnier
- 30: Vertiefung
- 32: Notfallkoffer
- 34: Steuereinheit
- 36: Vakuummatratze
- 38: Handgriff
- 40: Gurt
- 41: Fußboden
- 42: Benutzer
- 44: Patient
- 46: Transportgestell
- 48: Kabinenmonument
- 50: Monumentenwandung
- 52: Klappe
- 54: Aufnahmevorrichtung
- 56: Haube
- 58: Auflagefläche
- 60: Flugzeug
- 62: Kabine

## Patentansprüche

1. Mobile Vorrichtung (2) mit integrierter Tragevorrichtung (4) für Patienten (44), aufweisend:
- eine Basis (6) mit drehbar gelagerten Rädern (12, 14) auf einer Unterseite (8) zum Bewegen der Basis (6) auf einem Boden,
- ein auf einer Oberseite (10) der Basis (6) befestigtes Gestell (16), das mindestens einseitig offen ist, und
- eine Tragevorrichtung (4) mit schwenkbar zueinander gelagerten Segmenten (24, 26),
wobei die Segmente (24, 26) dazu ausgebildet sind, die Tragevorrichtung (4) in eine erste Form zu falten, in der alle Segmente (24, 26) in einer Ebene aneinander anschließen, und in eine zweite Form zu falten, in der die Tragevorrichtung (4) kompaktiert ist,
wobei die Tragevorrichtung (4) und das Gestell (16) komplementär zueinander ausgebildet sind, sodass die Tragevorrichtung (4) in der zweiten Form weitgehend vollständig in das Gestell (16) einbringbar ist,
wobei die Breite der Tragevorrichtung (4), die einer kurzen Seite der Tragevorrichtung (4) entspricht, mit der Höhe des Gestells (16) korreliert, und
wobei die Segmente (24, 26) derart gestaltet sind, dass sie bei Platzierung hochkant in dem Gestell (16) einen Teil der äußeren Oberfläche des Gestells (16) ausbilden, sodass die mobile Vorrichtung bei darin befindlicher Transportvorrichtung eine rundum geschlossene Einheit ausbildet.

2. Vorrichtung (2) nach Anspruch 1,
wobei das Gestell (16) zwei Wandungen (18) aufweist, die von der Basis (6) abstehen und einen Zwischenraum (22) definieren, in den die Tragevorrichtung (4) in der zweiten Form einschiebbar ist.

3. Vorrichtung (2) nach Anspruch 1 oder 2,
wobei die Tragevorrichtung (4) mindestens ein erstes Segment (24) und mindestens zwei zweite Segmente (26) aufweist, die abwechselnd aufeinander folgen, und
wobei das zweite Segment (26) eine größere Fläche aufweist als das erste Segment (24).

4. Vorrichtung (2) nach Anspruch 3,
wobei die Fläche des zweiten Segments (26) mindestens doppelt so groß ist wie die Fläche des ersten Segments (24).

5. Vorrichtung (2) nach einem der vorhergehenden Ansprüche,
wobei das Gestell (16) ein von der Basis (6) beabstandetes Deckelelement (20) besitzt, und
wobei die Tragevorrichtung (4) zwischen das Deckelelement (20) und die Basis (6) einbringbar ist.

6. Vorrichtung (2) nach Anspruch 5,
wobei das Deckelelement (20) eine Vertiefung (30) zur Aufnahme eines Notfallkoffers (32) aufweist.

7. Vorrichtung (2) nach einem der vorhergehenden Ansprüche,
wobei mindestens eines der Räder (12, 14) mit einer Antriebsvorrichtung gekoppelt ist.

8. Vorrichtung (2) nach einem der vorhergehenden Ansprüche,
wobei äußerste Segmente der Tragevorrichtung (4) jeweils einen Handgriff (38) aufweisen.

9. Vorrichtung (2) nach einem der vorhergehenden Ansprüche,
wobei die Tragevorrichtung (4) auf einer Seite eine Vakuummatratze (36) aufweist.

10. Vorrichtung (2) nach Anspruch 9,
wobei die Vakuummatratze (36) in der zweiten Form innenliegend ist.

11. Vorrichtung (2) nach einem der vorhergehenden Ansprüche,
wobei die Vorrichtung (2) mit in dem Gestell (16) eingebrachter Tragevorrichtungen (4) äußere Abmessungen aufweist, die höchstens denen eines Full-Size-Kabinentrolleys für Flugzeugkabinen (62) entsprechen.

12. System zum Transport liegender Patienten (44) in einem Verkehrsmittel, aufweisend mindestens eine Vorrichtung (2) nach einem der Ansprüche 1 bis 11.

13. System nach Anspruch 12,
ferner aufweisend eine Aufnahmevorrichtung (54) zur Aufnahme der Transportvorrichtung in der ersten Form, und
wobei die Aufnahmevorrichtung (54) eine klappbare Auflagefläche und eine faltbare Haube (56) aufweist, die dazu ausgebildet ist, die Tragevorrichtung (4) vollständig zu überdecken.

14. System nach Anspruch 13,
wobei die Auflagefläche zwei schwenkbar zueinander angeordnete Klappen (52) aufweist, welche bündig aufeinander klappbar und um 180° auseinanderklappbar sind, und
wobei die Haube (56) mit beiden Klappen (52) gekoppelt ist, sodass sie beim Auseinanderklappen wie eine Ziehharmonika auseinandergefaltet wird und beim Aufeinanderklappen zusammengefaltet wird.

15. System nach Anspruch 13,
wobei die Aufnahmevorrichtung (54) in eine Tür oder eine Wandung (50) eines Monuments in einer Kabine (62) eines Fahrzeugs integrierbar ist.

## Claims

1. Mobile apparatus (2) with an integrated stretcher apparatus (4) for patients (44), comprising:
- a base (6) having rotatably mounted wheels (12, 14) on a bottom side (8) for moving the base (6) on the ground,
- a frame (16) which is fastened to a top side (10) of the base (6) and which is open at least on one side, and
- a stretcher apparatus (4) having segments (24, 26) which are mounted pivotably relative to one another,
wherein the segments (24, 26) are configured for folding the stretcher apparatus (4) into a first form, in which all the segments (24, 26) adjoin one another in a plane, and for folding said stretcher apparatus into a second form, in which the stretcher apparatus (4) is packed down,
wherein the stretcher apparatus (4) and the frame (16) are configured to be complementary to one another such that the stretcher apparatus (4) in the second form can be largely completely introduced into the frame (16),
wherein the width of the stretcher apparatus (4), which corresponds to a short side of the stretcher apparatus (4), correlates with the height of the frame (16), and
wherein the segments (24, 26) are designed in such a way that they form a part of the outer surface of the frame (16) when positioned upright in the frame (16), such that the mobile apparatus, with a transport apparatus located therein, forms a completely closed unit.

2. Apparatus (2) according to Claim 1,
wherein the frame (16) has two walls (18), which project from the base (6) and define an intermediate space (22) into which the stretcher apparatus (4) can be inserted in the second form.

3. Apparatus (2) according to Claim 1 or 2,
wherein the stretcher apparatus (4) has at least one first segment (24) and at least two second segments (26), which follow one another in an alternating manner, and wherein the second segment (26) has a larger area than the first segment (24).

4. Apparatus (2) according to Claim 3,
wherein the area of the second segment (26) is at least twice as large as the area of the first segment (24).

5. Apparatus (2) according to one of the preceding claims,
wherein the frame (16) has a cover element (20) which is spaced apart from the base (6), and
wherein the stretcher apparatus (4) can be introduced between the cover element (20) and the base (6).

6. Apparatus (2) according to Claim 5,
wherein the cover element (20) has a recess (30) for receiving an emergency kit (32).

7. Apparatus (2) according to one of the preceding claims,
wherein at least one of the wheels (12, 14) is coupled to a drive apparatus.

8. Apparatus (2) according to one of the preceding claims,
wherein outermost segments of the stretcher apparatus (4) each have a handle (38).

9. Apparatus (2) according to one of the preceding claims,
wherein the stretcher apparatus (4) has a vacuum mattress (36) on one side.

10. Apparatus (2) according to Claim 9,
wherein the vacuum mattress (36) is on the inside in the second form.

11. Apparatus (2) according to one of the preceding claims,
wherein the apparatus (2), with the stretcher apparatus (4) introduced in the frame (16), has outer dimensions which correspond at most to those of a full-size cabin trolley for aircraft cabins (62).

12. System for transporting patients (44) in a lying position in a means of transportation, comprising at least one apparatus (2) according to one of Claims 1 to 11.

13. System according to Claim 12,
also comprising a receiving apparatus (54) for receiving the transport apparatus in the first form, and
wherein the receiving apparatus (54) has a foldable bearing surface and a foldable covering (56) which is configured to completely cover the stretcher apparatus (4) .

14. System according to Claim 13,
wherein the bearing surface has two flaps (52) which are arranged so as to be pivotable relative to one another and which can be folded flush with one another and can be folded apart through 180°, and
wherein the covering (56) is coupled to the two flaps (52), such that said covering is folded out in the manner of a concertina during the folding-apart operation and is folded up during the folding-together operation.

15. System according to Claim 13,
wherein the receiving apparatus (54) can be integrated in a door or a wall (50) of a monument in a cabin (62) of a vehicle.

## Revendications

1. Dispositif mobile (2) avec dispositif de support intégré (4) pour patients (44), présentant :
- une base (6) avec des roues (12, 14) montées de manière rotative sur un côté inférieur (8) pour déplacer la base (6) sur un sol,
- un châssis (16) fixé sur un côté supérieur (10) de la base (6), qui est ouvert au moins d'un côté, et
- un dispositif de support (4) avec des segments (24, 26) montés de manière pivotante les uns par rapport aux autres,
dans lequel les segments (24, 26) sont réalisés pour plier le dispositif de support (4) en une première forme dans laquelle tous les segments (24, 26) sont contigus dans un plan, et en une deuxième forme dans laquelle le dispositif de support (4) est compacté,
dans lequel le dispositif de support (4) et le châssis (16) sont réalisés de manière complémentaire l'un par rapport à l'autre, de telle sorte que le dispositif de support (4) peut être inséré essentiellement complètement dans le châssis (16) dans la deuxième forme,
dans lequel la largeur du dispositif de support (4) correspondant à un petit côté du dispositif de support (4) est en corrélation avec la hauteur du châssis (16), et
dans lequel les segments (24, 26) sont conçus de telle sorte que, lorsqu'ils sont placés de chant dans le châssis (16), ils réalisent une partie de la surface extérieure du châssis (16), de telle sorte que le dispositif mobile réalise une unité fermée sur tout son pourtour lorsque le dispositif de transport se trouve à l'intérieur.

2. Dispositif (2) selon la revendication 1,
dans lequel le châssis (16) présente deux parois (18) qui s'étendent depuis la base (6) et définissent un espace intermédiaire (22) dans lequel le dispositif de support (4) peut être inséré dans la deuxième forme.

3. Dispositif (2) selon la revendication 1 ou 2,
dans lequel le dispositif de support (4) présente au moins un premier segment (24) et au moins deux deuxièmes segments (26) qui se suivent en alternance, et
dans lequel le deuxième segment (26) présente une surface plus grande que le premier segment (24).

4. Dispositif (2) selon la revendication 3,
dans lequel la surface du deuxième segment (26) est au moins deux fois plus grande que la surface du premier segment (24).

5. Dispositif (2) selon l'une quelconque des revendications précédentes,
dans lequel le châssis (16) possède un élément de couvercle (20) espacé de la base (6), et
dans lequel le dispositif de support (4) peut être inséré entre l'élément de couvercle (20) et la base (6).

6. Dispositif (2) selon la revendication 5,
dans lequel l'élément de couvercle (20) présente un renfoncement (30) pour recevoir une trousse de secours (32) .

7. Dispositif (2) selon l'une quelconque des revendications précédentes,
dans lequel au moins une des roues (12, 14) est couplée à un dispositif d'entraînement.

8. Dispositif (2) selon l'une quelconque des revendications précédentes,
dans lequel les segments les plus extérieurs du dispositif de support (4) présentent chacun une poignée (38) .

9. Dispositif (2) selon l'une quelconque des revendications précédentes,
dans lequel le dispositif de support (4) présente un matelas à vide (36) sur un côté.

10. Dispositif (2) selon la revendication 9,
dans lequel le matelas à vide (36) est situé à l'intérieur dans la deuxième forme.

11. Dispositif (2) selon l'une quelconque des revendications précédentes,
dans lequel le dispositif (2), avec des moyens de support (4) introduits dans le châssis (16), présente des dimensions extérieures qui correspondent au plus à celles d'un chariot de cabine pleine grandeur pour des cabines d'avion (62).

12. Système pour le transport de patients allongés (44) dans un moyen de transport, présentant au moins un dispositif (2) selon l'une quelconque des revendications 1 à 11.

13. Système selon la revendication 12,
présentant en outre un dispositif de réception (54) pour recevoir le dispositif de transport dans la première forme, et
dans lequel le dispositif de réception (54) présente une surface d'appui rabattable et un capot pliable (56) qui est réalisé pour recouvrir entièrement le dispositif de support (4).

14. Système selon la revendication 13,
dans lequel la surface d'appui présente deux volets (52) agencés de manière pivotante l'un par rapport à l'autre, qui peuvent être rabattus à fleur l'un sur l'autre et être écartés de 180°, et
dans lequel le capot (56) est couplé aux deux volets (52) de telle sorte qu'il se déplie comme un accordéon lorsqu'il est déployé et se replie lorsqu'il est rabattu.

15. Système selon la revendication 13,
dans lequel le dispositif de réception (54) peut être intégré dans une porte ou une paroi (50) d'un monument dans une cabine (62) d'un véhicule.
